Europäisches Patentamt

European Patent Office

Office européen des brevets

(19)

(11) Publication number: **0 146 187**
**B1**

(12) **EUROPEAN PATENT SPECIFICATION**

(45) Date of publication of patent specification: **08.06.88**

(21) Application number: **84201829.3**

(22) Date of filing: **11.12.84**

(51) Int. Cl.⁴: **C 03 C 3/078,** C 03 C 3/085,
C 03 C 3/087, H 01 J 61/30

(54) **Glass composition suitable for use in a fluorescent lamp.**

(30) Priority: **20.12.83 NL 8304360**

(43) Date of publication of application:
**26.06.85 Bulletin 85/26**

(45) Publication of the grant of the patent:
**08.06.88 Bulletin 88/23**

(84) Designated Contracting States:
**BE DE FR GB IT NL**

(56) References cited:
**EP-A-0 098 648**
**GB-A-2 066 237**
**US-A-4 277 286**

**CHEMICAL ABSTRACTS, vol. 81, no. 20, 18th
November 1974, page 571, no. 128809k,
Columbus, Ohio, US**

(73) Proprietor: **N.V. Philips' Gloeilampenfabrieken
Groenewoudseweg 1
NL-5621 BA Eindhoven (NL)**

(72) Inventor: **Spierings, Gijsbertus Adrianus
Cornelus Maria**
c/o INT. OCTROOIBUREAU B:V. Prof. Holstlaan
6
**NL-5656 AA Eindhoven (NL)**
Inventor: **van Hove, Eddy François Clement**
c/o INT. OCTROOIBUREAU B:V. Prof. Holstlaan
6
**NL-5656 AA Eindhoven (NL)**

(74) Representative: **Auwerda, Cornelis Petrus et al
INTERNATIONAAL OCTROOIBUREAU B.V. Prof.
Holstlaan 6
NL-5656 AA Eindhoven (NL)**

Courier Press, Leamington Spa, England.

## Description

The invention relates to a glass composition for use in a tubular lamp envelope which comprises silicon oxide, at least one alkali metal oxide and at least one oxide selected from the group formed by zirconium oxide and aluminium oxide, which glass composition furthermore comprises at least two oxides selected from the group formed by zinc oxide and the alkaline earth metal oxides.

The invention also relates to a fluorescent lamp comprising a vacuum-tight sealed tubular glass lamp envelope in which two electrodes connected to current supply wires are provided between which a discharge takes place during operation of the lamp, the lamp envelope being filled with a gas atmosphere and a metal which during operation of the lamp at least partly evaporates, a layer comprising at least one phosphor being provided on the inside of the wall of the lamp envelope.

The invention relates more particularly to a fluorescent lamp in which the metal which evaporates at least partly during operation of the lamp is mercury.

The US Patent US—A—4277286 discloses glass compositions which are suitable for use as cathode ray tube faceplates, which glass compositions comprise 43 to 55 weight % $SiO_2$; 0.5—3 weight % $Li_2O$; 4—8 weight % $Na_2O$; 3—8 weight % $K_2O$; 0—5 weight % CaO; 10—20 weight % BaO; 5—12 weight % ZnO; 0.3—1 weight % $CeO2$; 2—8 weight % $ZrO_2$; 0—4 weight % $Al_2O_3$ and 2—14 weight % SrO, the sum of the quantities of alkali metal oxides being 10—18 weight %.

Eurpean Patent Application EP—A—0098648 discloses a glass composition according to the first paragraph of the present specification for use as a core glass in an optical glass fibre. Said core glass does not contain $Al_2O_3$ but may contain $ZrO_2$, SrO and $Y_2O_3$. In the same European Patent Application glass compositions according to the first paragraph of the present specification are described for use as a cladding glass in an optical glass fibre. Said cladding glasses comprise no $ZrO_2$ and no BaO but may comprise $Al_2O_3$ and $B_2O_3$. Both in the core glass and in the cladding glass it is desired for the quantity of potassium oxide (in mol.%) to be less than half of the overall quantity of alkali metal oxides. The glass compositions which are disclosed in the above-mentioned European Patent Application have a number of properties which make them suitable for use in a lamp envelope for a fluorescent lamp. Favourable properties are, for example, a great light transmission, a good processibility and a large corrosion resistance. The glass compositions, to be suitable for use in lamp envelopes of fluorescent lamps, must satisfy a number of additional conditions, for example, as regards the interaction with a phosphor layer. Said conditions impose further restrictions on the quantities of a few components of the glass composition, without impairing the processing properties of the glass.

During the manufacture of a lamp as described above, for example, upon sealing and further shaping, the temperature of the glass of the lamp envelope is locally considerably increased, for example, to above 600°C. The prior art glass compositions for use in lamp envelopes for fluorescent lamps comprise sodium oxide to obtain a glass which can readily be processed at not too high a temperature, see, for example United States Patent Specification 3,094,641. If such a lamp is provided with a phosphor layer on the inside of the wall of the lamp envelope, the phosphor is contaminated with sodium from the glass of the lamp envelope. As a result of this, the initial luminous efficiency of the phosphor is reduced. During operation of the lamp the luminous efficiency of the phosphor also decreases further in the course of time.

It is an object of the invention to provide a fluorescent lamp and a glass composition suitable for use in a tubular lamp envelope for such a lamp, in which the lamp has a high luminous efficiency which during operation of the lamp decreases only slightly with time.

A further object of the invention is to provide a mercury vapour fluorescent lamp and a glass composition suitable for use in a tubular lamp envelope of such a lamp, in which the lamp has a luminous efficiency which during operation of the lamp decreases slightly with time. In order to prevent decrease of the light transmission of the glass (greying), it is desirable for the glass to withstand penetration of mercury.

According to the invention both objects are achieved by a glass composition which consists of 57.5—65 mol.% $SiO_2$; 4—5 mol.% $Li_2O$; 1—3 mol.% $Na_2O$; 8—9 mol.% $K_2O$; 0—8 mol.% CaO; 0—10 mol.% MgO; 5—15 mol.% BaO; 0—6 mol.% ZnO; 0—0.5 mol.% $CeO_2$; 0—3 mol.% $ZrO_2$ and 0—5 mol.% $Al_2O_3$, the sum of the quantities of $ZrO_2$ and $Al_2O_3$ being 2—6 mol.%, the sum of the quantities of alkali metal oxides being 10—15 mol.% and the sum of the quantities of ZnO and the total quantity of the alkaline earth metal oxides including MgO being 20—30 mol.%.

In a further embodiment of the glass composition according to the invention the glass composition comprises 0—2 mol.% $Li_2O$ and 3—4 mol.% $Na_2O$, the quantities of the other components being as indicated hereinbefore.

The invention is based on the experimentally found phenomenon that the mobility of alkaili metal ions in the glass can be considerably restricted by choosing the quantities of the various alkali metal oxides to be within the above-mentioned limits. In order to further restrict the influence of the sodium ions on the phosphor layer, the quantity of sodium oxide is at most 4 mol.%. The mobility of the alkaili metal ions in the glass is further restricted by choosing, within the glass compositions according to the above-mentioned European Patent Application, the total quantity of the alkaline earth metal oxides, including zinc oxide, to be larger than 20 mol.%.

The penetration of Hg is prevented by the large content of alkaline earth metal oxides in the glass. If the refractory material of the furnace, in which the glass is melted, comprises $ZrO_2$, it is efficacious to choose the quantity of BaO in the glass to be not too large and to use, for example, CaO and MgO to thus diminish wear of the refractory material of the furnace.

In order to achieve a good light transmission of the glass, the quantity of iron oxide in the glass should be small, for example, less than 250 ppm (parts per million). Iron oxide is usually present in small quantities in the starting materials from which the glass is prepared. By the addition of $CeO_2$ (for example 0.2 mol.%) to the glass any ferrous oxide present is oxidized to ferric oxide as a result of which the light absorption moves to wavelengths outside the visible range.

The mobility of the sodium ions is restricted in particular when the quantity of potassium oxide is large with respect to the quantity of sodium oxide.

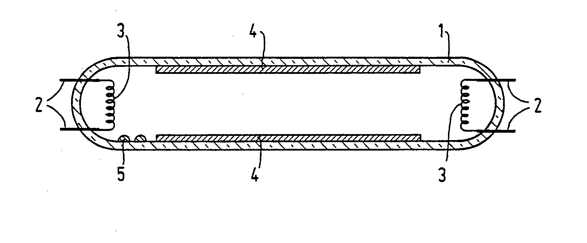

The invention will be described in greater detail with reference to a few examples and a drawing, the sole figure of which is a longitudinal section of an embodiment of a lamp according to the invention, in this case a mercury vapour discharge lamp.

The figure shows a lamp comprising a vacuum-tight sealed lamp envelope 1. Current supply wires 2 are provided through the wall of the lamp envelope 1 and are connected to electrodes 3. In the embodiment shown, the electrodes 3 are coiled filaments but any further known construction of the electrodes is also suitable. A layer of a phosphor 4 is present on the inner wall of the lamp envelope 1. Some metallic mercury 5 which evaporates after ignition of the lamp is present within the lamp envelope 1. Before use such a lamp is filled, for example, with a gas mixture of 99% by volume of Ne and 1% by volume of Ar at an overall pressure of 730 Pa.

A few glass compositions were melted having compositions as recorded in the table hereinafter. The fusion of said glasses was carried out in a platinum crucible in an electric furnace. Starting materials were silica, aluminium oxide, zirconium dioxide, cerium oxide, zinc oxide and the carbonates of calcium, barium, magnesium, lithium, sodium and potassium (in so far as these metals were present in the examples). No particular problems occurred during the fusion and further processing.

Lamps having lamp envelopes manufactured from glasses having a composition according to the table have a good luminous efficiency and a long life. Measurements of the Hg content of the glass after 600 and 1600 hours operation of the lamp demonstrated that the Hg content was a factor of 2 to 3 times lower than after the same duration in prior art lamps. After 2000 hours in operation no discolouring of the glass of the lamp occurred. The sodium content of the phosphor is approximately a factor of 2 lower than in prior art lamps. After 5000 hours in operation the luminous efficiency of the phosphor of the lamp had not decreased to less than 98% of the initial value, while in prior art lamps this had decreased in the same period of time to 80% of the initial value.

TABLE
Composition in mol.%

|  | I | II | III | IV |
|---|---|---|---|---|
| $SiO_2$ | 59.8 | 59.8 | 61.3 | 62.3 |
| $ZrO_2$ | — | 2.5 | — | 2.5 |
| $Al_2O_3$ | 2.5 | — | 2.5 | — |
| $Li_2O$ | 4.5 | 4.5 | 2 | — |
| $Na_2O$ | 2 | 2 | 3 | 4 |
| $K_2O$ | 8.5 | 8.5 | 8.5 | 8.5 |
| CaO | 7.5 | 5 | 5 | 5 |
| BaO | 7.5 | 12.5 | 12.5 | 12.5 |
| MgO | 7.5 | — | 5 | 5 |
| ZnO | — | 5 | — | — |
| $CeO_2$ | 0.2 | 0.2 | 0.2 | 0.2 |

## Claims

1. A glass composition for use in a tubular lamp envelope which comprises silicon oxide, at least one alkali metal oxide and at least one oxide selected from the group formed by zirconium oxide and aluminium oxide, which glass composition furthermore comprises at least two oxides selected from the group formed by zinc oxide and the alkaline earth metal oxides, characterized in that the glass composition consists of 57.5—65 mol. % $SiO_2$; 4—5 mol.% $Li_2O$; 1—3 mol.% $Na_2O$; 8—9 mol.: $K_2O$; 0—8 mol.% CaO; 0—10 mol.% MgO; 5—15 mol.% BaO; 0—6 mol.% ZnO; 0—0.5 mol.% $CeO_2$; 0—3 mol.% $ZrO_2$ and 0—5 mol.% $Al_2O_3$, the sum of the quantities of $ZrO_2$ and $Al_2O_3$ being 2—6 mol.%, the sum of the quantities of alkali metal oxides being 10—15 mol.% and the sum of the quantities of ZnO and the total quantity of the alkaline earth metal oxides including MgO being 20—30 mol.%.

2. A glass composition for use in a tubular lamp envelope which comprises silicon oxide, at least one alkali oxide and at least one oxide selected from the group formed by zirconium oxide and aluminium oxide, which glass composition furthermore comprises at least two oxides selected from the group formed by zinc oxide and the alkaline earth metal oxides, characterized in that the glass composition consists of 57.5—65 mol.% SiO₂; 0—2 mol.% Li₂O; 3—4 mol.% Na₂O; 8—9 mol.% K₂O; 0—8 mol.% CaO; 0—10 mol.% MgO; 5—15 mol.% BaO; 0—6 mol.% ZnO; 0—0.5 mol.% CeO₂; 0—3 mol.% ZrO₂ and 0—5 mol.% Al₂O₃, the sum of the quantities of ZrO₂ and Al₂O₃ being 2—6 mol.% the sum of the quantities of alkali metal oxides being 10—15 mol.% and the sum of the quantities of ZnO and the total quantity of the alkaline earth metal oxides including MgO being 20—30 mol.%.

3. A fluorescent lamp comprising a vacuum-tight sealed tubular glass lamp envelope in which two electrodes connected to current supply wires are provided between which a discharge takes place during operation of the lamp, the lamp envelope being filled with a gas atmosphere and a metal which during operation of the lamp at least partly evaporates; a layer comprising at least one phosphor being provided on the inside of the wall of the lamp envelope, characterized in that the lamp envelope is manufactured from a glass having a composition as claimed in Claim 1 or 2.

4. A fluorescent lamp as claimed in Claim 3 in which the metal which during use of the lamp evaporates at least partly, is mercury.

## Patentansprüche

1. Glaszusammensetzung zum Gebrauch in einer rohrförmigen Lampenhülle,. wobei die Zusammensetzung Siliziumoxid, wenigstens ein Alkalimetalloxid und wenigstens ein Oxid aus der Gruppe, die durch Zirkonoxid und Aluminiumoxid gebildet wird, aufweist, wobei diese Glaszusammensetzung weiterhin wenigstens zwei Oxide aufweist, die aus der Gruppe gewählt worden sind, die durch Zinkoxid und die Erdalkalimetalloxide gebildet wird, dadurch gekennzeichnet, dass die Glaszusammensetzung aus 57.5—65 mol% SiO₂; 4—5 mol% Li₂O; 1—3 mol% Na₂O; 8—9 mol% K₂O; 0—8 mol% CaO; 0—10 mol% MgO; 5—15 mol% BaO, 0—6 mol% ZnO; 0—0.5 mol% CeO₂; 0—3 mol% ZrO₂ und 0—5 mol% Al₂O₃ besteht, wobei due Summe der Mengen zon ZrO₂ und Al₂O₃ 2—6 mol%, die Summe der Mengen Alkalimetalloxide 10—15 mol% und die Summe der Mengen von ZnO und der Gesamtmenge der Erdalkalimetalloxide einschliesslich MgO 20—30 mol% beträgt.

2. Glaszusammensetzung zum Gebrauch in einer rohrförmigen Lampenhülle, wobei die Zusammensetzung Siliziumoxid, wenigstens ein Alkalimetalloxid und wenigstens ein Oxid aus der Gruppe, die durch Zirkonoxid und Aluminiumoxid gebildet wird, aufweist, wobei diese Gaszusammensetzung weiterhin wenigstens zwei Oxide aufweist, die aus der Gruppe gewählte worden sind, die durch Zinkoxid und die Erdalkalimetalloxide gebildet wird, dadurch gekennzeichnet, dass die Glaszusammensetzung aus 57.5—65 mol% SiO₂; 0—2 mol% Li₂O; 3—4 mol: Na₂O; 8—9 mol: K₂O; 0—8 mol% CaO, 0—10 mol: MgO; 5—15 mol% BaO; 0—6 mol% ZnO; 0—0.5 mol% CeO₂; 0—3 mol% ZrO₂ und 0—5 mol% Al₂O₃ besteht, wobei die Summe der Mengen von ZrO₂ und Al₂O₃ 2—6 mol%, die Summe der Mengen Alkalimetalloxide 10—15 mol% und die Summe der Mengen von ZnO und der Gesamtmenge der Erdalkalimetalloxide einschliesslich MgO 20—30 mol% beträgt.

3. Leuchtstofflampe mit einer vakuumdicht zugeschmolzenen rohrförmigen gläsernen Lampenhülle, in der zwei mit Stromfuhrdrähten verbundene Elektroden vorgesehen sind, zwischen denen im Betrieb der Lampe eine Entladung stattfindet, wobei die Lampenhülle mit einer Gasatmosphäre une einem Metall gefüllt ist, das m Betrieb der Lampe wenigstens teilweise verdunstet, und in der weiterhin eine Schicht vorgesehen ist, die wenigstens einen Phosphor aufweist, der auf der Innenseite der Wand der Lampenhülle vorgesehen ist, dadurch gekennzeichnet, dass die Lampenhülle aus einem Glas mit der Zusammensetzung nach Anspruch 1 oder 2 hergestellt ist.

4. Leuchtstofflampe nach Anspruch 3, in der das Metall, das im Betrieb der Lampe wenigstens teilweise verdunstet, Quecksilber ist.

## Revendications

1. Composition de verre à utiliser dans une enveloppe de lampe tubulaire, comprenant de l'oxyde de silicium, au moins un oxyde de métal alcalin et au moins un oxyde sélectionné dans le groupe formé par l'oxyde de zirconium et l'oxyde d'aluminium, composition de verre qui comprend en outre au moins deux oxydes sélectionnés dans le groupe formé par l'oxyde de zinc et les oxydes des métaux alcalino-terreux, caractérisé en ce que la composition de verre est constituée par 57.5 à 65% en moles de SiO₂; 4 à 5% en moles de Li₂O; 1 à 3% en moles de Na₂O; 8 à 9% en moles de K₂O, 0 à 8% en moles de CaO; 0 à 10% en moles de MgO, 5 à 15% en moles de BaO, 0 à 6% en moles de ZnO; 0 à 0.5% en moles de CeO₂; 0 à 3% en moles de ZrO₂ et 0 à 5% moles de Al₂O₃, la somme de quantités de ZrO₂ et de Al₂O₃ étant de 2 à 6% en moles, la somme des quantité des oxydes de métal alcalin étant de 10 à 15% en moles et la somme des quantités de ZnO et de la quantité totale des oxydes de métal alcalino-terreux comprenant MgO étant de 20 à 30% en moles.

2. Composition de verre à utiliser dans une enveloppe de lampe tubulaire comprenant de l'oxyde de silicium, au moins un oxyde de métal alcalin et au moins un oxyde sélectionné dans le groupe formé par l'oxyde de zirconium et l'oxyde d'aluminium, composition de verre qui comprend en outre au moins deux oxydes sélectionés dans le groupe formé par l'oxyde de zinc et les oxydes des métaux alcalino-terreux, caractérisé en ce que la composition de verre est constituée par 57.5 à 65% en moles de SiO₂; 0 à 2% en moles de Li₂O; 3 à 4% en moles de Na₂O; 8 à 9% en moles de K₂O, 0 à 8% en moles de CaO; 0 à 10% en moles de MgO; 5 à 15% en moles de BaO; 0 à 6% en moles de ZnO; 0 à 0.5% en moles de CeO$_2$; 0 à 3% en moles de ZrO$_2$ et 0 à 5% en moles de Al$_2$O$_3$, la somme des quantités de ZrO$_2$ et de Al$_2$O$_3$ étant de 2 à 6% en moles, la somme des quantités des oxydes de métal alcalin étant de 10 à 15% en moles et la somme des quantités de Zno et de la quantité totale des oxydes de métal alcalino-terreux comprenant MgO étant de 20 à 30% en moles.

3. Une lampe fluorescente comprenant une enveloppe de verre tubulaire scellée d'une façon étanche au vide dans laquelle sont disposées deux électrodes reliées à des fils d'alimentation de courant entre lesquelles se produit une décharge pendant le fonctionnement de la lampe, l'enveloppe de lampe étant remplie d'une atmosphère de gaz et d'un mètal qui, lors du fonctionnement de la lampe s'évapore au moins partiellement; une couche contenant au moins une substance fluorescente étant appliquée sur la face intérieure de la paroi de lampe de l'enveloppe de la lampe, caractérisée en ce que l'enveloppe de lampe est réalisée en verre présentant une composition selon la revendication 1 ou 2.

4. Lampe fluorescente selon la revendication 3, dans laquelle le métal qui s'évapore au moins partiellement pendant l'utilisation de la lampe est du mercure.